# EUROPEAN PATENT SPECIFICATION

(11) **EP 3 979 148 B1**
(45) Date of publication and mention of the grant of the patent: **16.10.2024**
(21) Application number: 20813203.5
(22) Date of filing: 28.05.2020
(51) Int. Cl.: G06N 20/00, G06N 3/10, G06N 3/08, G06N 5/02, G06N 20/20, G06F 3/04847

(54) **PRESENTING METHOD AND SYSTEM OF MACHINE LEARNING AUTOMATIC MODELING PROCESS**
DARSTELLUNGSVERFAHREN UND SYSTEM EINES AUTOMATISCHEN MODELLIERUNGSPROZESSES FÜR MASCHINELLES LERNEN
PROCÉDÉ ET SYSTÈME DE PRÉSENTATION D'UN PROCESSUS DE MODÉLISATION AUTOMATIQUE D'APPRENTISSAGE MACHINE

(30) Priority: 28.05.2019 CN 201910451079
(43) Date of publication of application: 06.04.2022
(73) Proprietor: The Fourth Paradigm (Beijing) Tech Co Ltd, Beijing 100085 (CN)
(72) Inventor: LOU, Chen, Beijing 100085 (CN); XU, Yun, Beijing 100085 (CN)
(74) Representative: Müller Hoffmann & Partner
(86) International application number: PCT/CN2020/092944
(87) International publication number: WO 2020/239033

(56) References cited:
- CN-A- 107 169 575
- CN-A- 108 710 949
- CN-A- 108 898 229
- CN-A- 108 960 433
- US-A1- 2016 232 457
- DUDLEY JOHN J JJD50@CAM AC UK ET AL: "A Review of User Interface Design for Interactive Machine Learning", ACM TRANSACTIONS ON INTERACTIVE INTELLIGENT SYSTEMS (TIIS), ACM, 2 PENN PLAZA, SUITE 701 NEW YORK NY 10121-0701 USA, vol. 8, no. 2, 13 June 2018 (2018-06-13), pages 1 - 37, XP058679313, ISSN: 2160-6455, DOI: 10.1145/3185517
- XIANG JIE KA FEI: "A Visual Introduction to Machine Learning Models", 11 November 2018 (2018-11-11), CN, pages 1 - 4, XP009532575, Retrieved from the Internet <URL:https://zhuanlan.zhihu.com/p/37415489>

## Description

The present application claims the priority of a Chinese patent application of which the application number is 201910451079.2, the application date is May 28, 2019, and the title is "PRESENTING METHOD AND SYSTEM OF MACHINE LEARNING AUTOMATIC MODELING PROCESS".

### Technical Field

The present disclosure generally relates to a field of machine learning automatic modeling, and more particularly, relates to an optimized presenting method and system of a machine learning automatic modeling process.

Document Xiang Jie Ka Fei: "A Visual Introduction to Machine Learning Models", 11 November 2018 (2018-11-11), pages 1-4, XP009532575, CN relates to an introduction into machine learning models.

### Background Art

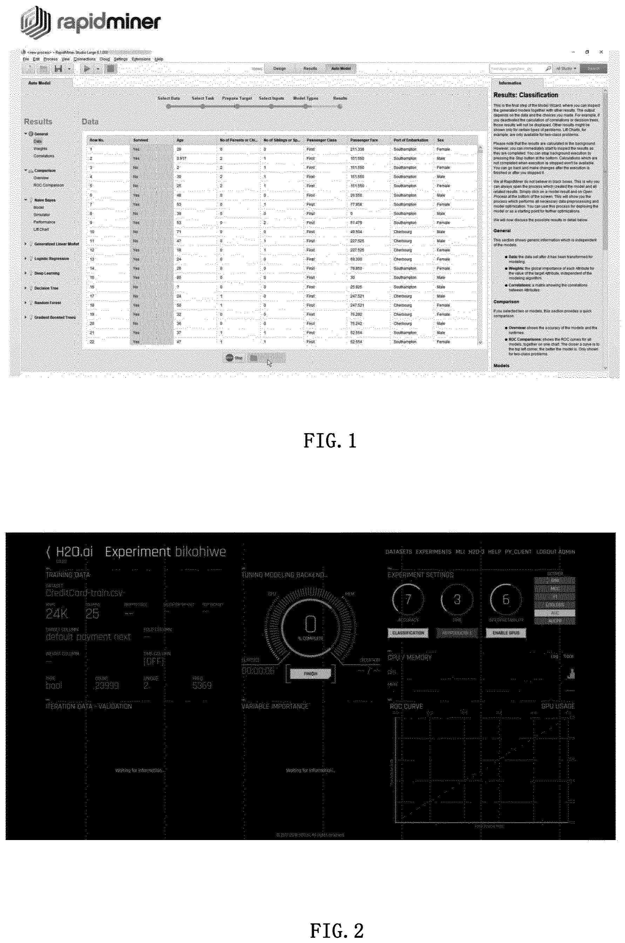

At present, in the process of machine learning automatic modeling, users can browse a running state of automatic modeling through an interface. For example, as shown in Figs. 1 and 2, automatic modeling running results presented in the form of data and charts may be browsed by switching the result directory tree on the left of an interface in the existing RapidMiner Auto Model interface, and running states of the automatic modeling and general running results and resource occupancy may be browsed through an interface in the existing H2O Driveless AI.

However, there are many content and stages involved in the modeling process. The existing methods of presenting a modeling process (for example, RapidMiner and H2O) do not clearly divide a machine learning automatic modeling process into a plurality of stages, and cannot effectively present the progresses of different stages of machine learning automatic modeling to users in a limited screen. This makes the users, especially some novice users who have limited understanding of machine learning automatic modeling, fail to understand this process well, increasing their cognitive and operational thresholds.

In addition, in the existing machine learning automatic modeling process, due to the lack of a clear stage division for machine learning automatic modeling, users cannot intuitively perceive the current automatic modeling progress from an interface, what stage has passed, what stage is running, and what stage is about to run. This will increase the users' anxiety about waiting, and also bring an uncontrollable negative feeling to the users.

That is to say, in the existing machine learning automatic modeling process, the users cannot effectively understand a specific process of the automatic modeling, and in particular, they lack effective perception of changes in actual progress.

US 2016/232457 A1 discloses various user interfaces that guide a user through the machine learning process.

### SUMMARY

The invention is defined by the appended claims. The present disclosure aims to overcome the above defect that a progress of each stage cannot be intuitively and effectively browsed in the existing presenting method of machine learning automatic modeling.

### BRIEF DESCRIPTION OF THE DRAWINGS

These and other aspects and advantages of the present disclosure will become more apparent and easily understood from the following detailed descriptions of embodiments of the present disclosure, taken in conjunction with the accompanying drawings in which:
FIG. 1 and FIG. 2 illustrate examples of interfaces of machine learning automatic modeling processes in the prior art;
FIG. 3 illustrates a flowchart of a presenting method of a machine learning automatic modeling process according to an exemplary embodiment of the present disclosure;
FIG. 4 illustrates a schematic diagram of an interface of a data table concatenation stage in the machine learning automatic modeling process according to an exemplary embodiment of the present disclosure;
FIG. 5 illustrates a schematic diagram of an interface of a feature extraction stage in the machine learning automatic modeling process according to an exemplary embodiment of the present disclosure;
FIG. 6A and FIG. 6B illustrate schematic diagrams of a parameter setting page in the machine learning automatic modeling process according to an exemplary embodiment of the present disclosure;
FIG. 7 illustrates another schematic diagram of the interface of the feature extraction stage in the machine learning automatic modeling process according to an exemplary embodiment of the present disclosure;
FIG. 8 illustrates a schematic diagram of an interface of a model training stage in the machine learning automatic modeling process according to an exemplary embodiment of the present disclosure; and
FIG. 9 illustrates a block diagram of a presenting system of the machine learning automatic modeling process according to an exemplary embodiment of the present disclosure.

### DETAILED DESCRIPTION OF EXEMPLARY EMBODIMENTS

In order to enable those skilled in the art to better understand the present disclosure, exemplary embodiments of the present disclosure will be further described in detail below, in conjunction with the drawings and detailed description of the exemplary embodiments.

References to embodiments including some but not all features as literally defined in the independent claims are present for illustration purposes only.

Now the embodiments of the present disclosure will be specifically referred to, and the examples of the embodiments are illustrated in the drawings in which the same reference numerals always refer to the same components. Hereinafter, the embodiments will be explained with reference to the drawings so as to facilitate explanation of the present disclosure. It should be noted here that "at least one of several items" occurring in the present disclosure means including these three parallel situations, "any one of the several items", "a combination of any of the several items", and "an entirety of the several items". For example, "including at least one of A and B" means including the following three parallel situations: (1) including A; (2) including B; and (3) including A and B. For another example, "executing at least one of step one and step two" means the following three parallel situations: (1) executing step one; (2) executing step two; and (3) executing step one and step two.

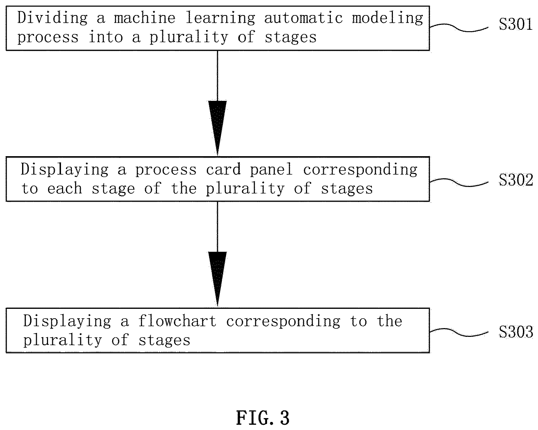

The present disclosure proposes an optimized presenting method and system of a machine learning automatic modeling process which may clearly present progress stages of the machine learning automatic modeling process to users in the form of foldable process cards and may present flowcharts corresponding to respective stages to the users. In addition, resource occupancy information and log information in the machine learning automatic modeling process may be presented to the users. In addition, dynamic progress information in the machine learning automatic modeling process may be presented to the users. In addition, the presenting method of the machine learning automatic modeling process according to the present disclosure may provide the users with buttons for partial adjustment of modeling schemes (for example, feature editing or feature deletion, etc.) to facilitate the users to be able to perform corresponding partial adjustments. Hereinafter, the presenting method and system of the machine learning automatic modeling process of the exemplary embodiments of the present disclosure will be specifically described with reference to FIG. 3 to FIG. 8. In addition, for clarity and conciseness, descriptions of well-known functions and structures will be omitted.

FIG. 3 illustrates a flowchart of a presenting method of a machine learning automatic modeling process according to an exemplary embodiment of the present disclosure.

In step S301, the machine learning automatic modeling process may be divided into a plurality of stages.

It should be understood that, here, respective stages of the machine learning automatic modeling process may be divided in advance according to artificial settings, and then process card panels and flowcharts corresponding to the respective stages may be displayed in executing the presenting method of the machine learning automatic modeling process according to the exemplary embodiment of the present disclosure. That is to say, the above step S301 is not necessarily included in the presenting method of the machine learning automatic modeling process according to the exemplary embodiment of the present disclosure.

According to the invention, the machine learning automatic modeling process is divided into a data table concatenation stage, a feature extraction stage, and a model training stage. Here, the data table concatenation stage refers to a stage of generating a concatenation table based on at least one data table containing attribute data and at least one data table containing target result data. Here, as an example, the attribute data may be behavior data, and the target result data may be feedback result data corresponding to the behavior data, which may be a direct final result and may also be related data that can deduce the final result. The feature extraction stage refers to a stage of generating features based on the attribute data. The model training stage includes at least one algorithm sub-stage of performing model training using at least one algorithm. Here, the algorithm may include at least one of LR (Logistic Regression) algorithm, GBDT (Gradient Boosting Decision Tree) algorithm, and NN (Neural Network) algorithm, but it is not limited thereto, and the algorithm may also include other different types of algorithms that may be used for model training. In addition, the machine learning automatic modeling process may not be limited to being divided into the above three stages, but may be divided into at least one of the above three stages, or may be divided into other plurality of stages according to at least one of user needs and different standards.

In step S302, a process card panel corresponding to each stage of the plurality of stages is displayed. In particular, a process card panel corresponding to a current running stage is unfolded while keeping the process card panels corresponding to stages that have been completed and stages that have not run yet in a folding state, according to the current running stage of the machine learning automatic modeling, and a dynamic effect reflecting at least one of a running process and a running result of the current running stage is displayed in real time in the unfolded process card panel, according to the running process of the current running stage.

According to the exemplary embodiment of the present disclosure, when the machine learning automatic modeling is performed, a task tag, for a current task in a background, indicating a stage of the task and a process position of the task in the stage is generated, the task tag of the background may be queried in a foreground, and the running process of the current running stage is determined according to the task tag queried in the foreground. In particular, the current running stage in the machine learning automatic modeling is determined according to the stage of the current task indicated in the task tag, and the running process of the current running stage is determined according to the process position of the current task in the current running stage indicated in the task tag.

According to the exemplary embodiment of the present disclosure, a running state indicating that it is in progress may be identified, and output progress information corresponding to the running process of the current running stage may be displayed in real time, in the unfolded process card panel. In addition, a running state indicating that it has been completed may be identified, and a part of output result information of the stage may be displayed in the folded process card panel corresponding to the stage that has been completed, and a running state indicating that it has not run yet may be identified in the folded process card panel corresponding to the stage that has not run yet.

According to the exemplary embodiment of the present disclosure, when receiving a user input for the folded process card panel corresponding to the stage that has been completed, the process card panel may be unfolded and the output result information of the stage may be displayed in the unfolded process card panel.

In step S303, a flowchart corresponding to the plurality of stages may be displayed. In particular, a dynamic effect reflecting the running process of the current running stage is displayed in real time in the flowchart, according to the running process of the current running stage.

According to the exemplary embodiment of the present disclosure, the steps S302 and S303 may be executed simultaneously. That is to say, the process card panel corresponding to each stage of the plurality of stages and the flowchart corresponding to the plurality of stages may be displayed simultaneously in a presenting interface of the machine learning automatic modeling. For example, the process card panel and the flowchart may be displayed in different areas on a display screen.

According to the exemplary embodiment of the present disclosure, the presenting method of the machine learning automatic modeling process may further include: as the machine learning automatic modeling progresses, collecting and displaying resource occupancy information in the machine learning automatic modeling process in real time, for example, at least one of CPU occupancy and memory occupancy.

According to the exemplary embodiment of the present disclosure, the presenting method of the machine learning automatic modeling process may further include: as the machine learning automatic modeling progresses, generating and displaying log information in the machine learning automatic modeling process in real time, for example, reminders about at least one of information, warnings, and abnormity in the machine learning automatic modeling process.

According to the exemplary embodiment of the present disclosure, the presenting method of the machine learning automatic modeling process may further include: displaying dynamic progress information about the machine learning automatic modeling process. The dynamic progress information may be used to indicate dynamic changes in the progress of the current stage or the entire scheme.

Here, the dynamic progress information about the machine learning automatic modeling process may include at least one of: information about the number of exploration rounds of at least one of automatic feature engineering and a model scheme, information about time having been spent in modeling, information about time for remaining modeling, and information about a real-time highest AUC value, wherein the AUC value is a value for estimating effect of a model.

According to the exemplary embodiment of the present disclosure, the presenting method of the machine learning automatic modeling process may further include: a button for pausing the machine learning automatic modeling process may be displayed, and the machine learning automatic modeling process may be paused when receiving the user input for the button.

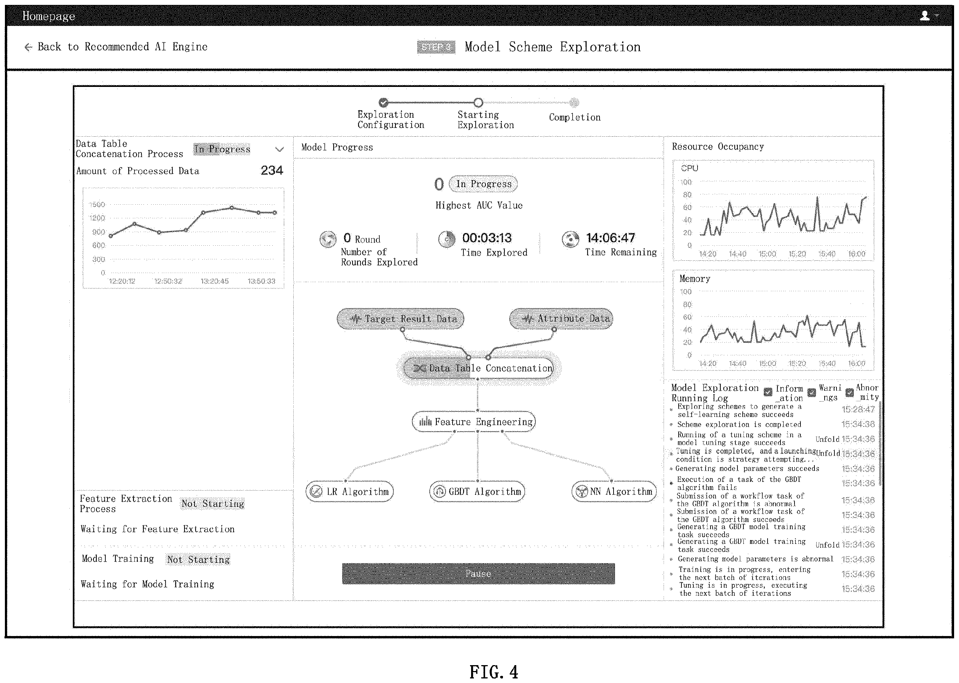

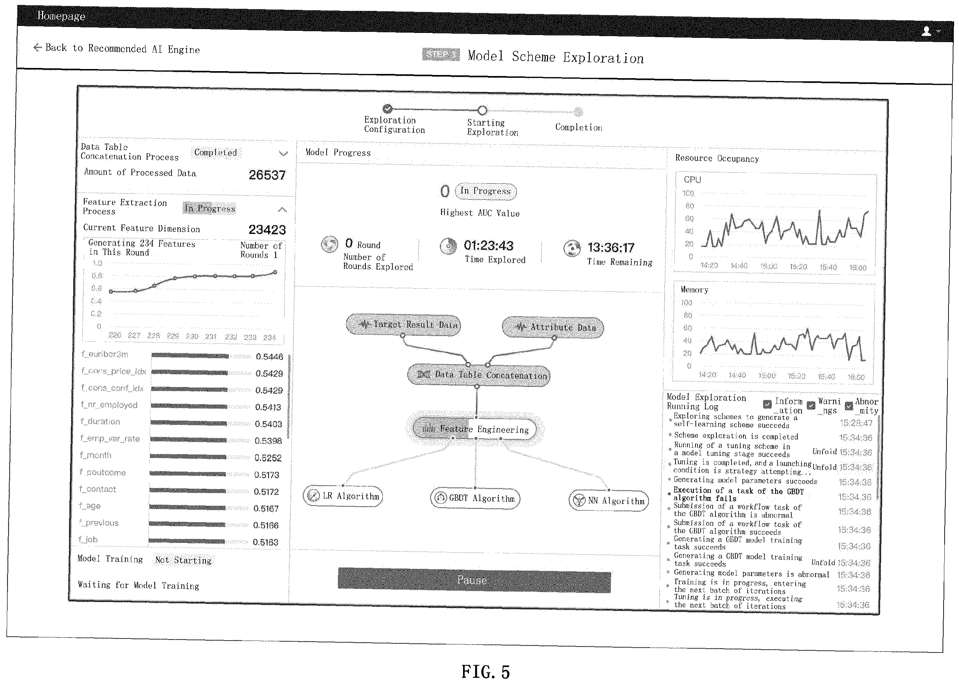

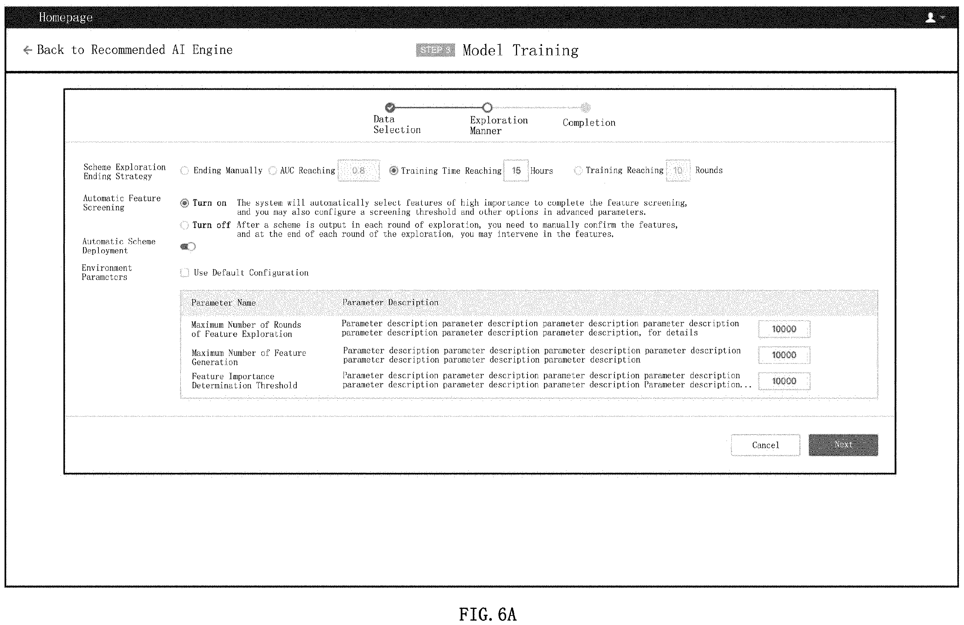

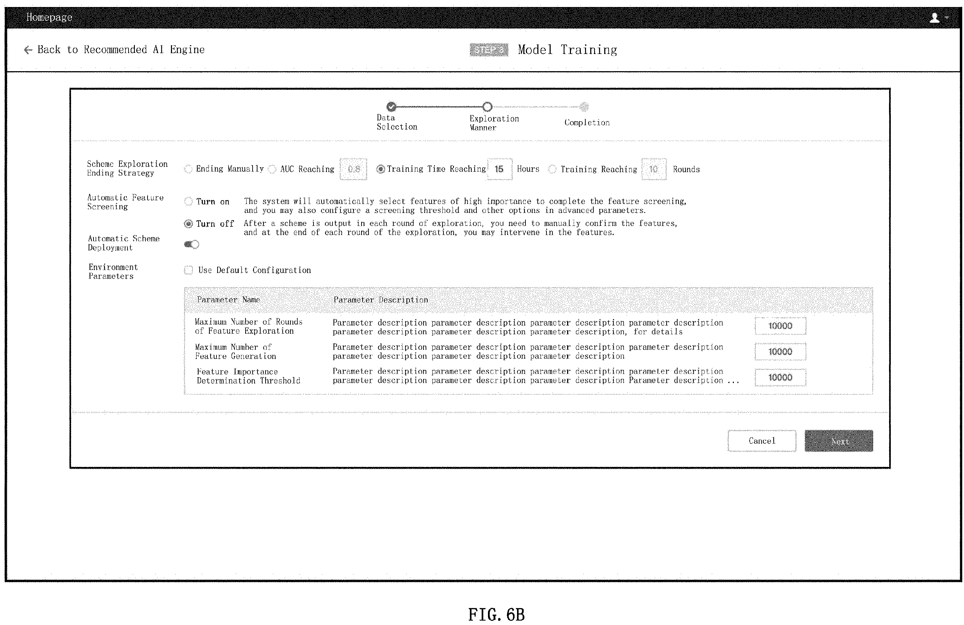

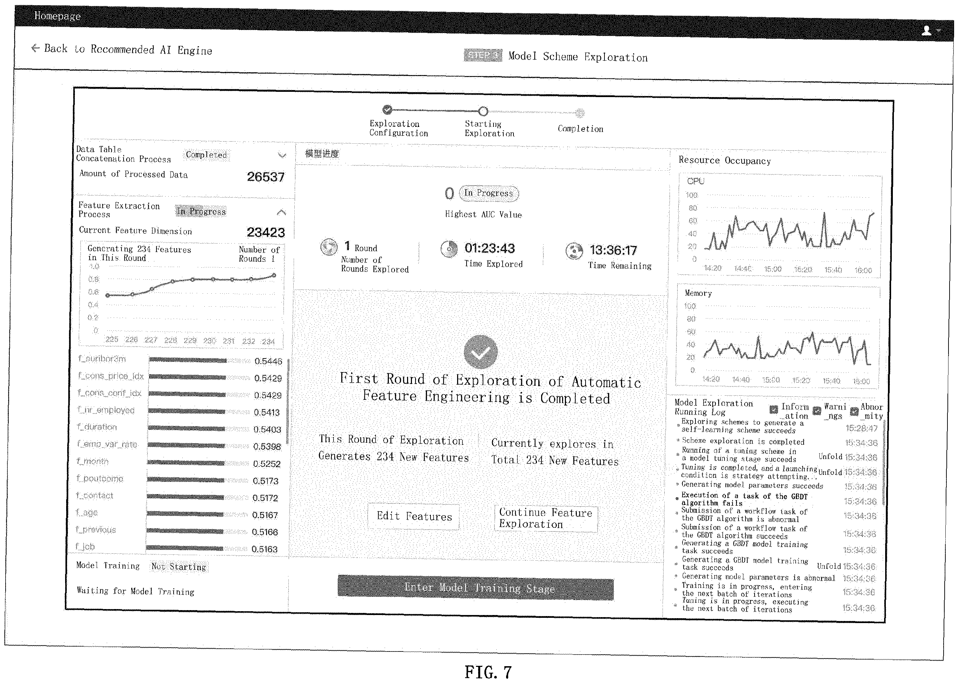

Hereinafter, dividing the machine learning automatic modeling process into the data table concatenation stage, the feature extraction stage, and the model training stage is taken as an example, and the presenting method of the machine learning automatic modeling process according to the exemplary embodiments of the present disclosure will be specifically described with reference to FIG. 4 to FIG. 7. FIG. 4 illustrates a schematic diagram of an interface of the data table concatenation stage in the machine learning automatic modeling process according to an exemplary embodiment of the present disclosure. FIG. 5 illustrates a schematic diagram of an interface of the feature extraction stage in the machine learning automatic modeling process according to an exemplary embodiment of the present disclosure. FIG. 6 illustrates another schematic diagram of an interface of the feature extraction stage in the machine learning automatic modeling process according to an exemplary embodiment of the present disclosure. FIG. 7 illustrates a schematic diagram of an interface of a model training stage in the machine learning automatic modeling process according to an exemplary embodiment of the present disclosure.

According to the exemplary embodiments of the present disclosure, with reference to FIG. 4, FIG. 5 and FIG. 7, the process card panel may be displayed in the left part of the presenting interface of the machine learning automatic modeling process, and the flowchart may be displayed in the lower middle part of the presenting interface of the machine learning automatic modeling process. In addition, the resource occupancy information in the machine learning automatic modeling process may be displayed in the upper right part of the presenting interface of the machine learning automatic modeling process, the log information in the machine learning automatic modeling process may be displayed in the lower right part of the presenting interface of the machine learning automatic modeling process, and the dynamic progress information about the machine learning automatic modeling process may be displayed in the upper middle part of the presenting interface of the machine learning automatic modeling process. The button for pausing the machine learning automatic modeling process may be displayed in the lower part of the area for displaying the flowchart. Certainly, the presenting interface of the machine learning automatic modeling process is not limited thereto, but may also be arranged in any different layout.

According to the exemplary embodiment of the present disclosure, with reference to FIG. 4, when the data table concatenation stage in the machine learning automatic modeling process is currently running, a process card panel corresponding to the data table concatenation stage is unfolded, and since the feature extraction stage and the model training stage have not run yet, a process card panel corresponding to the feature extraction stage and a process card panel corresponding to the model training stage are kept in a folding state. In the unfolded process card panel corresponding to the data table concatenation stage, a running state indicating that it is in progress (for example, "in progress") is identified and output progress information corresponding to a running process of the data table concatenation stage is displayed in real time, for example, the output progress information about the amount of data that has been concatenated over time. The output progress information may be displayed in the form of at least one of text and graphs, for example, being displayed by at least one of the following manners: displaying the number of data that has been concatenated is 234 by text, and displaying the number of data that has been concatenated by a graph with time as a horizontal axis and the number of data as a vertical axis. A running state indicating that it has not run yet (for example, "not starting") is identified in the folded process card panels corresponding to the feature extraction stage and the model training state.

In addition, the flowchart includes a node indicating the data table concatenation stage. When the data table concatenation stage in the machine learning automatic modeling process is currently running, a dynamic effect reflecting a running process of generating a concatenation table is displayed in real time in the node indicating the data table concatenation stage in the flowchart, according to the running process of generating the concatenation table.

In addition, when the data table concatenation stage in the machine learning automatic modeling process is currently running, the dynamic progress information about the machine learning automatic modeling process may be displayed in the area for displaying the dynamic progress information (for example, the upper middle part of the presenting interface), for example, the time having been spent in modeling and the time for remaining modeling may be displayed dynamically in real time.

In addition, when the data table concatenation stage in the machine learning automatic modeling process is currently running, the resource occupancy in executing the data table concatenation stage currently may be displayed dynamically in real time in the area for displaying the resource occupancy information (for example, the upper right part of the presenting interface), and the log information in executing the data table concatenation stage currently may be displayed dynamically in real time in the area for displaying the log information (for example, the lower right part of the presenting interface).

According to the exemplary embodiment of the present disclosure, with reference to FIG. 5, when the data table concatenation stage in the machine learning automatic modeling process has been completed and when the feature extraction stage in the machine learning automatic modeling process is currently running, the process card panel corresponding to the feature extraction stage is unfolded, and since the data table concatenation stage has been completed and the model training stage has not run yet, the process card panel corresponding to the data table concatenation stage and the process card panel corresponding to the model training stage are kept in a folding state. In the unfolded process card panel corresponding to the feature extraction stage, the running state indicating that it is in progress (for example, "in progress") is identified and the output progress information corresponding to the running process of the feature extraction stage is displayed in real time, for example, the output progress information of at least one of the number, name, and importance of the generated features. The output progress information may be displayed in the form of at least one of text, graphs and diagrams, for example, a current feature dimension is 23423 is displayed by text, the number and importance of the generated features are displayed by a graph with the number of features as a horizontal axis and importance as a vertical axis, and the names and importance of the generated features are displayed by a diagram with feature names, importance histograms and importance values.

The running state indicating that it has been completed (for example, "having been completed") is identified, and the amount of final processed data is displayed, for example, 26537, in the folded process card panel corresponding to the data table concatenation stage that has been completed. In addition, when receiving a user input (for example, clicking the process card panel corresponding to the data table concatenation stage) for the folded process card panel corresponding to the data table concatenation stage, the process card panel corresponding to the data table concatenation stage may be unfolded again and the output result information about the amount of final processed data may be displayed, for example, text and graphs are displayed, in the unfolded process card panel corresponding to the data table concatenation stage. According to another exemplary embodiment of the present disclosure, when the folded process card panel corresponding to the data table concatenation stage that has been completed is unfolded again through the user input (for example, a click of the user), the currently unfolded process card panel corresponding to the feature extraction stage may be automatically folded. The automatically folded process card panel corresponding to the feature extraction stage may be unfolded again through the user input (for example, a click of the user).

The running state indicating that it has not run yet (for example, "not starting") is identified in the folded process card panel corresponding to the model training stage that has not run yet.

In addition, the flowchart includes a node indicating the feature extraction stage. When the feature extraction stage in the machine learning automatic modeling process is currently running, the dynamic effect reflecting the running process of the feature extraction stage is displayed in real time in the node indicating the feature extraction stage in the flowchart, according to the running process of the feature extraction stage.

In addition, when the feature extraction stage in the machine learning automatic modeling process is currently running, the dynamic progress information about the machine learning automatic modeling process may be displayed in the area for displaying the dynamic progress information (for example, the upper middle part of the presenting interface), for example, the time having been spent in modeling and the time for remaining modeling may be displayed dynamically in real time. In addition, when the feature extraction stage involves multiple rounds of feature exploration, the number of exploration rounds of the feature that has been performed may also be dynamically displayed in real time, that is, the number of exploration rounds of automatic feature engineering.

In addition, when the feature extraction stage in the machine learning automatic modeling process is currently running, the resource occupancy in executing the feature extraction stage currently may be displayed dynamically in real time in the area for displaying the resource occupancy information (for example, the upper right part of the presenting interface), and the log information in executing the feature extraction stage currently may be displayed dynamically in real time in the area for displaying the log information (for example, the lower right part of the presenting interface).

According to the exemplary embodiment of the present disclosure, in the case of turning on automatic feature exploration in the feature extraction stage, each of multiple rounds of feature exploration may be automatically completed. For example, with reference to FIG. 6A, the user may select to turn on the automatic feature exploration in the parameter setting page.

According to the invention, with reference to FIG. 6B, the user may select to turn off the automatic feature exploration in the parameter setting page. In the case of turning off the automatic feature exploration in the feature extraction stage, with reference to FIG. 7, when the feature extraction stage is currently running, whenever a round of feature exploration is completed, the feature exploration is paused, and result information of this round of the feature exploration, a button for editing features, a button for continuing the feature exploration, and a button for entering the model training stage are displayed. For example, when a first round of the feature exploration is completed, the feature exploration may be paused, and information about the first round of the feature exploration and related buttons may be displayed in the area originally for displaying the flowchart (for example, the lower middle part of the presenting interface), for example, information indicating the completion of the first round of the feature exploration, the first round of the feature exploration generating 234 new features, having explored a total of 234 new features currently, the button for editing features, and the button for continuing the feature exploration are displayed, and a button for entering the model training stage is displayed where the button for pausing the machine learning automatic modeling process is originally displayed. The users are allowed to edit at least one explored feature in this round and a previous round, when receiving a user input for the button for editing features. It proceeds to a next round of the feature exploration, when receiving a user input for the button for continuing the feature exploration. The feature exploration is ended and the running of the model training stage starts, when receiving a user input for the button for entering the model training stage.

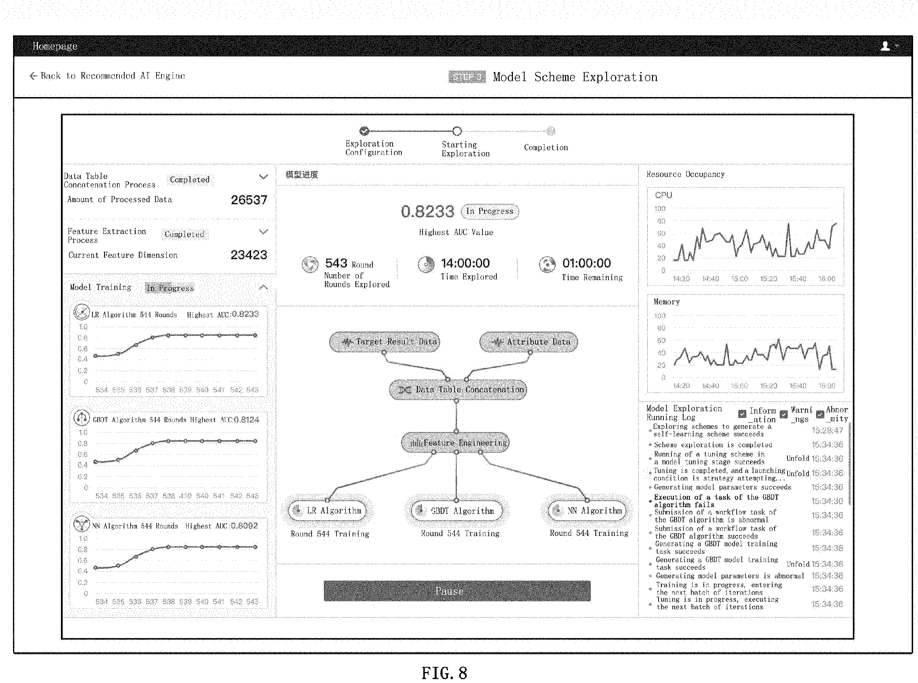

According to the exemplary embodiment of the present disclosure, with reference to FIG. 8, when the feature extraction stage in the machine learning automatic modeling process has been completed and when the model training stage in the machine learning automatic modeling process is currently running (here, the model training stage may include at least one algorithm sub-stage of performing model training using at least one algorithm), the process card panel corresponding to the model training stage is unfolded, and since the data table concatenation stage and the feature extraction stage have been completed, the process card panel corresponding to the data table concatenation stage and the process card panel corresponding to the feature extraction stage are kept in a folding state. In the unfolded process card panel corresponding to the model training stage, the running state indicating that it is in progress (for example, "in progress") is identified and the output progress information corresponding to a running process of the model training stage is displayed in real time, for example, the output progress information includes an AUC value for estimating the effect of the model obtained according to the number of exploration rounds of each algorithm and a real-time highest AUC value of each algorithm. The output progress information may be displayed in the form of at least one of text and graphs, for example, the current number of exploration rounds of each algorithm and the highest AUC value in all rounds explored by each algorithm are displayed by text (for example, the current number of exploration rounds of the LR algorithm is 544 and the highest AUC value in the previous 543 rounds explored is 0.8233, the current number of exploration rounds of the GBDT algorithm is 544 and the highest AUC value in the previous 543 rounds explored is 0.8124, and the current number of exploration rounds of the NN algorithm is 544 and the highest AUC value in the previous 543 rounds explored is 0.8092), and algorithm exploration information is displayed by a graph with the number of exploration rounds of the algorithm as a horizontal axis and the AUC value as a vertical axis.

The running state indicating that it has been completed (for example, "having been completed") is identified in the folded process card panels corresponding to the data table concatenation stage and the feature extraction stage that have been completed, the amount of final processed data, for example, 26537, is displayed in the folded process card panel corresponding to the data table concatenation stage that has been completed, and the current feature dimension, for example, 23423, is displayed in the folded process card panel corresponding to the feature extraction stage that has been completed. In addition, when receiving a user input (for example, clicking the process card panel corresponding to the data table concatenation stage) for at least one of the folded process card panels corresponding to the data table concatenation stage and the feature extraction stage, the at least one of the process card panel corresponding to the data table concatenation stage and the process card panel corresponding to the feature extraction stage may be unfolded again and at least one of the following operations may be performed: displaying the output result information (for example, displaying text and graphs) about the amount of final processed data in the unfolded process card panel corresponding to the data table concatenation stage, and displaying the output result information (for example, displaying text, graphs and diagrams) including at least one of the number, name, and importance of the final generated features in the unfolded process card panel corresponding to the feature extraction stage. According to another exemplary embodiment of the present disclosure, when at least one of the folded process card panels corresponding to the data table concatenation stage and the feature extraction stage that have been completed is unfolded again through the user input (for example, a click of the user), the currently unfolded process card panel corresponding to the model training stage may be automatically folded. The automatically folded process card panel corresponding to the model training stage may be unfolded again through the user input (for example, a click of the user).

In addition, the flowchart includes at least one node respectively indicating the at least one algorithm sub-stage. When the model training stage in the machine learning automatic modeling process is currently running, the dynamic effect reflecting the running process of each of the at least one algorithm sub-stage is displayed in real time in the at least one node respectively indicating the at least one algorithm sub-stage in the flowchart, according to a running process of each of the at least one algorithm sub-stage.

In addition, when the model training stage in the machine learning automatic modeling process is currently running, the dynamic progress information about the machine learning automatic modeling process may be displayed in the area for displaying the dynamic progress information (for example, the upper middle part of the presenting interface), for example, the real-time highest AUC value, the number of exploration rounds of the model scheme, the time having been spent in modeling and the time for remaining modeling may be displayed dynamically in real time. Here, the real-time highest AUC value may refer to the highest AUC value among the current number of rounds of all explorations in all algorithms. For example, as illustrated in FIG. 7, the real-time highest AUC value may refer to the highest AUC value of 0.8233 among the LR algorithm, GBDT algorithm, and NN algorithm in the previous 543 rounds explored.

In addition, when the model training stage in the machine learning automatic modeling process is currently running, the resource occupancy in executing the model training stage currently may be displayed dynamically in real time in the area for displaying the resource occupancy information (for example, the upper right part of the presenting interface), and the log information in executing the model training stage currently may be displayed dynamically in real time in the area for displaying the log information (for example, the lower right part of the presenting interface).

In addition, when completing the running of the model training stage, the output result information including the AUC value obtained according to the number of exploration rounds of each algorithm and the final highest AUC value of each algorithm may be displayed in the unfolded process card panel corresponding to the model training stage.

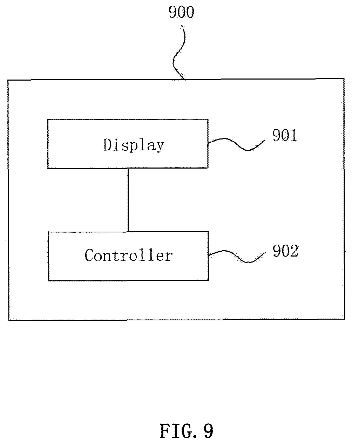

FIG. 9 illustrates a block diagram of a presenting system of the machine learning automatic modeling process according to an exemplary embodiment of the present disclosure.

With reference to FIG. 9, a presenting system 900 of the machine learning automatic modeling process according to the exemplary embodiment of the present disclosure may include a display 901 and a controller 902,
wherein the controller 902 is configured to: control the display 901 to display a process card panel corresponding to each stage of the machine learning automatic modeling process, and control the display 901 to display a flowchart corresponding to each stage, wherein the machine learning automatic modeling process is divided into a plurality of stages,
wherein the controller 902 controls the display 901 to unfold a process card panel corresponding to a current running stage, while keeping process card panels corresponding to stages that have been completed and stages that have not run yet in a folding state, according to the current running stage of the machine learning automatic modeling, and controls the display 901 to display a dynamic effect reflecting at least one of a running process and a running result of the current running stage in real time in the unfolded process card panel, according to the running process of the current running stage. Also, the controller 902 controls the display 901 to display the dynamic effect reflecting the running process of the current running stage in real time in the flowchart according to the running process of the current running stage.

As an example, the controller 902 may determine the running process of the current running stage by the following manners: when performing the machine learning automatic modeling, generating a task tag, for a current task in a background, indicating a stage of the task and a process position of the task in the stage; querying the task tag of the background in a foreground; and determining the running process of the current running stage according to the task tag queried in the foreground.

As an example, the controller 902 may control the display 901 to display the dynamic effect reflecting at least one of the running process and the running result of the current running stage in real time in the unfolded process card panel by the following manners: identifying a running state indicating that it is in progress, and displaying output progress information corresponding to the running process of the current running stage in real time, in the unfolded process card panel.

As an example, the controller 902 may control the display 901 to keep process card panels corresponding to stages that have been completed and stages that have not run yet in a folding state by the following manners: identifying a running state indicating that it has been completed, and displaying a part of output result information of the stage in the folded process card panel corresponding to the stage that has been completed, and identifying a running state indicating that it has not run yet in the folded process card panel corresponding to the stage that has not run yet.

As an example, when receiving a user input for the folded process card panel corresponding to the stage that has been completed, the controller 902 controls the display 901 to unfold the process card panel and display the output result information of the stage in the unfolded process card panel.

As an example, as the machine learning automatic modeling progresses, the controller 902 collects resource occupancy information in the machine learning automatic modeling process in real time, and controls the display 901 to display the resource occupancy information.

As an example, as the machine learning automatic modeling progresses, the controller 902 generates log information in the machine learning automatic modeling process in real time and controls the display 901 to display the log information.

As an example, the controller 902 controls the display 901 to display dynamic progress information about the machine learning automatic modeling process.

As an example, the dynamic progress information about the machine learning automatic modeling process includes at least one of: information about the number of exploration rounds of at least one of automatic feature engineering and a model scheme, information about time having been spent in modeling, information about time for remaining modeling, and information about a real-time highest AUC value, wherein the AUC value is a value for estimating effect of a model,
wherein, the controller 902 controls the display 901 to display a button for pausing the machine learning automatic modeling process, and the controller 902 pauses the machine learning automatic modeling process when receiving the user input for the button.

As an example, the plurality of stages include at least one of a data table concatenation stage, a feature extraction stage, and a model training stage.

As an example, the data table concatenation stage refers to a stage of generating a concatenation table based on at least one data table containing attribute data and at least one data table containing target result data, wherein the controller 902 controlling the display 901 to display the process card panel corresponding to each stage of the machine learning automatic modeling process includes at least one of: when the data table concatenation stage is running, displaying the output progress information about the amount of data that has been concatenated over time, in real time in the unfolded process card panel corresponding to the data table concatenation stage; and when completing the running of the data table concatenation stage, displaying the amount of final processed data in the folded process card panel corresponding to the data table concatenation stage, and when receiving the user input for the folded process card panel corresponding to the data table concatenation stage, unfolding the process card panel corresponding to the data table concatenation stage and displaying the output result information about the amount of final processed data in the unfolded process card panel corresponding to the data table concatenation stage,
wherein the flowchart corresponding to the plurality of stages includes a node indicating the data table concatenation stage, and the controller 902 controlling the display 901 to display the dynamic effect reflecting the running process of the current running stage in real time in the flowchart according to the running process of the current running stage includes: when the data table concatenation stage is running, displaying the dynamic effect reflecting the running process of the data table concatenation stage in real time in the node indicating the data table concatenation stage in the flowchart, according to the running process of generating the concatenation table.

As an example, the feature extraction stage refers to a stage of generating features based on the attribute data, wherein the controller 902 controlling the display 901 to display the process card panel corresponding to each stage of the machine learning automatic modeling process includes at least one of: when the feature extraction stage is running, displaying the output progress information including at least one of the number, name, and importance of the generated features in real time in the unfolded process card panel corresponding to the feature extraction stage; and when completing the running of the feature extraction stage, displaying the amount of final generated features in the folded process card panel corresponding to the feature extraction stage, and when receiving the user input for the folded process card panel corresponding to the feature extraction stage, unfolding the process card panel corresponding to the feature extraction stage and displaying the output result information including at least one of the number, name, and importance of the final generated features in the unfolded process card panel corresponding to the feature extraction stage,
wherein the flowchart corresponding to the plurality of stages includes a node indicating the feature extraction stage, and the controller 902 controlling the display 901 to display the dynamic effect reflecting the running process of the current running stage in real time in the flowchart according to the running process of the current running stage includes: when the feature extraction stage is running, displaying the dynamic effect reflecting the running process of the feature extraction stage in real time in the node indicating the feature extraction stage in the flowchart, according to the running process of the feature extraction stage.

As an example, the model training stage includes at least one algorithm sub-stage of performing model training using at least one algorithm, wherein the controller 902 controlling the display 901 to display the process card panel corresponding to each stage of the machine learning automatic modeling process includes at least one of: when the model training stage is running, displaying the output progress information including the AUC value for estimating the effect of the model obtained according to the number of exploration rounds of each algorithm and the real-time highest AUC value of each algorithm in the unfolded process card panel corresponding to the model training stage; and when completing the running of the model training stage, displaying the output result information including the AUC value obtained according to the number of exploration rounds of each algorithm and the final highest AUC value of each algorithm in the unfolded process card panel corresponding to the model training stage,
wherein the flowchart corresponding to the plurality of stages includes at least one node respectively indicating the at least one algorithm sub-stage, and the controller 902 controlling the display to display the dynamic effect reflecting the running process of the current running stage in real time in the flowchart according to the running process of the current running stage includes: when the model training stage is running, displaying the dynamic effect reflecting the running process of each of the at least one algorithm sub-stage in real time in the at least one node respectively indicating the at least one algorithm sub-stage in the flowchart, according to a running process of each of the at least one algorithm sub-stage.

As an example, the controller 902 may automatically complete each of multiple rounds of feature exploration, in the case of turning on automatic feature exploration in the feature extraction stage.

According to the invention, the controller 902, in the case of turning off the automatic feature exploration in the feature extraction stage, when the feature extraction stage is running, whenever a round of the feature exploration is completed, pauses the feature exploration, and controls the display 901 to display result information of this round of the feature exploration, a button for editing features, a button for continuing the feature exploration, and a button for entering the model training stage, allows the users to edit at least one explored feature in this round and a previous round, when receiving a user input for the button for editing features, proceeds to a next round of the feature exploration, when receiving a user input for the button for continuing the feature exploration, and ends the feature exploration and starts the running of the model training stage, when receiving a user input for the button for entering the model training stage.

The specific details of the above operations have been exemplarily described above with reference to FIG. 3 to FIG. 7, and the specific details when the presenting system illustrated in FIG. 8 performs the above operations will not be repeated here to avoid repetition.

The presenting method and system of the machine learning automatic modeling process according to the present disclosure may clearly present progress stages of the machine learning automatic modeling process to users in the form of foldable process cards, so as to help the users understand what stage the machine learning automatic modeling is progressing to, and may present the flowchart corresponding to the respective stages to the users, so as to help the users understand the machine learning automatic modeling process.

In addition, the presenting method and system of the machine learning automatic modeling process may present resource occupancy information in the machine learning automatic modeling process to the users, which facilitates the users monitor of the resource situation in the modeling process to allocate system resources reasonably.

In addition, the presenting method and system of the machine learning automatic modeling process according to the present disclosure may present log information in the machine learning automatic modeling process to the users, which may enable the users to perceive that the modeling process is in progress, and may satisfy the users' demands for reviewing and debugging error information at any time.

In addition, the presenting method and system of the machine learning automatic modeling process according to the present disclosure may present dynamic progress information of the machine learning automatic modeling process to the users so as to help the users understand real-time data related to the machine learning automatic modeling process.

In addition, the presenting method and system of the machine learning automatic modeling process according to the present disclosure may provide the users with buttons for partial adjustment of modeling schemes (for example, feature editing or feature deletion, etc.) to facilitate the experienced users to be able to adjust the modeling schemes according to their needs in the machine learning automatic modeling process.

The presenting method and system of the machine learning automatic modeling process according to the exemplary embodiments of the present disclosure have been described above with reference to FIG. 3 to FIG. 8.

The systems, devices, and units illustrated in FIG. 8 may be respectively configured as software, hardware, firmware, or any combination thereof to execute specific functions. For example, these systems, devices, or units may correspond to dedicated integrated circuits, may also correspond to pure software codes, or may correspond to modules combining software and hardware. In addition, one or more functions implemented by these systems, devices, or units may also be uniformly executed by components in a physical entity device (for example, a processor, a client, or a server, etc.).

In addition, the method described with reference to FIG. 3 may be implemented by a program (or instruction) recorded on a computer-readable storage medium. For example, according to the exemplary embodiment of the present disclosure, a computer-readable storage medium for presenting the machine learning automatic modeling process may be provided, wherein the computer-readable storage medium has a computer program (or instruction) for executing the method steps of presenting the machine learning automatic modeling process described with reference to FIG. 3 recorded thereon. For example, the computer program (or instruction) may be used to execute the following method steps: displaying a process card panel corresponding to each stage of the machine learning automatic modeling process, wherein the machine learning automatic modeling process is divided into a plurality of stages; and displaying a flowchart corresponding to the plurality of stages, wherein the displaying the process card panel corresponding to each stage of the machine learning automatic modeling process includes: unfolding a process card panel corresponding to a current running stage, while keeping process card panels corresponding to stages that have been completed and stages that have not run yet in a folding state, according to the current running stage of the machine learning automatic modeling; and displaying a dynamic effect reflecting at least one of a running process and a running result of the current running stage, in real time in the unfolded process card panel, according to the running process of the current running stage, wherein the displaying the flowchart corresponding to the plurality of stages includes: displaying a dynamic effect reflecting the running process of the current running stage in real time in the flowchart, according to the running process of the current running stage.

The computer program in the above computer-readable storage medium may run in an environment deployed in computer devices such as a client, a host, an agent device and a server. It should be noted that the computer program may also be used to execute additional steps in addition to the above steps, or execute more specific processing when executing the above steps. These additional steps and further processed content have been mentioned in the description of the related method with reference to FIG. 3, and thus will not be repeated here in order to avoid repetition.

It should be noted that the presenting system of the machine learning automatic modeling process according to the exemplary embodiments of the present disclosure may completely rely on the running of the computer program to implement corresponding functions, that is, respective units correspond to respective steps in the functional architecture of the computer program, so that the entire system is called through a special software package (for example, lib library) to implement the corresponding functions.

On the other hand, respective devices illustrated in FIG. 8 may also be implemented by hardware, software, firmware, middleware, microcode, or any combination thereof. When implemented by software, firmware, middleware or microcode, a program code or code segment used to perform a corresponding operation may be stored in a computer-readable storage medium such as a storage medium, so that a processor may read and execute the corresponding program code or code segment to perform the corresponding operation.

For example, the exemplary embodiments of the present disclosure may also be implemented as a computing device, which includes a storage component and a processor. The storage component stores a set of computer-executable instructions, and when the set of computer-executable instructions is executed by the processor, the presenting method of the machine learning automatic modeling process according to the exemplary embodiments of the present disclosure is executed.

In particular, the computing device may be deployed in a server or a client, and may also be deployed on a node device in a distributed network environment. In addition, the computing device may be a PC computer, a tablet device, a personal digital assistant, a smart phone, a web application, or other devices capable of executing the above set of instructions.

Here, the computing device does not have to be a single computing device, but may also be any device or a collection of circuits that may execute the above instructions (or set of instructions) separately or jointly. The computing device may also be a part of an integrated control system or a system manager, or may be configured as a portable electronic device interconnecting with a local or remote (for example, via wireless transmission) interface.

In the computing device, the processor may include a central processing unit (CPU), a graphics processing unit (GPU), a programmable logic device, a dedicated processor system, a microcontroller, or a microprocessor. As an example rather than a limitation, the processor may also include an analog processor, a digital processor, a microprocessor, a multi-core processor, a processor array, a network processor, etc.

Some operations described in the presenting method of the machine learning automatic modeling process according to the exemplary embodiments of the present disclosure may be implemented by software, and some operations may be implemented by hardware. In addition, these operations may also be implemented by a combination of software and hardware.

The processor may execute instructions or codes stored in one of the storage components, wherein the storage component may also store data. Instructions and data may also be sent and received via a network through a network interface device, wherein the network interface device may adopt any known transmission protocol.

The storage component may be integrated with the processor, for example, an RAM or flash memory is arranged in an integrated circuit microprocessor, etc. In addition, the storage component may include an independent device, such as an external disk drive, a storage array, or any other storage device that may be used by a database system. The storage component and the processor may be operatively coupled, or may communicate with each other, for example, through an I/O port, a network connection, etc., so that the processor may read files stored in the storage component.

In addition, the computing device may also include a video display (such as a liquid crystal display) and a user interaction interface (such as a keyboard, a mouse, a touch input device, etc.). All components of the computing device may be connected to each other via at least one of a bus and a network.

The operations involved in the presenting method of the machine learning automatic modeling process according to the exemplary embodiments of the present disclosure may be described as various interconnected or coupled functional blocks or functional diagrams. However, these functional blocks or functional diagrams may be equally integrated into a single logic device or operate according to imprecise boundaries.

Therefore, the method described with reference to FIG. 3 may be implemented by a system including at least one computing device and at least one storage device storing instructions.

According to the exemplary embodiment of the present disclosure, the at least one computing device is a computing device that executes the presenting method of the machine learning automatic modeling process according to the exemplary embodiment of the present disclosure, and a set of computer-executable instructions is stored in the storage device. When the set of computer-executable instructions is executed by the at least one computing device, the method steps described with reference to FIG. 3 are executed. For example, when the set of computer-executable instructions is executed by the at least one computing device, the following method steps may be executed: displaying a process card panel corresponding to each stage of the machine learning automatic modeling process, wherein the machine learning automatic modeling process is divided into a plurality of stages; and displaying a flowchart corresponding to the plurality of stages, wherein the displaying the process card panel corresponding to each stage of the machine learning automatic modeling process includes: unfolding a process card panel corresponding to a current running stage, while keeping process card panels corresponding to stages that have been completed and stages that have not run yet in a folding state, according to the current running stage of the machine learning automatic modeling; and displaying a dynamic effect reflecting at least one of a running process and a running result of the current running stage, in real time in the unfolded process card panel, according to the running process of the current running stage, wherein the displaying the flowchart corresponding to the plurality of stages includes: displaying a dynamic effect reflecting the running process of the current running stage in real time in the flowchart, according to the running process of the current running stage.

Various exemplary embodiments of the present disclosure are described above. It should be understood that the above descriptions are only exemplary, but not limited. The present disclosure is not limited to the disclosed various exemplary embodiments. Therefore, the protection scope of the present disclosure should be subject to the scope of the claims.

### Industrial Applicability

The presenting method and system of the machine learning automatic modeling process and the computer-readable storage medium provided in the present disclosure may clearly present progress stages of the machine learning automatic modeling process to users in the form of foldable process cards, so as to help the users understand what stage the machine learning automatic modeling is progressing to, and may present the flowcharts corresponding to the respective stages to the users, so as to help the users understand the machine learning automatic modeling process.

In addition, the presenting method and system of the machine learning automatic modeling process and the computer-readable storage medium provided in the present disclosure may present resource occupancy information in the machine learning automatic modeling process to the users, which facilitates the users monitor the resource situation in the modeling process to allocate system resources reasonably and overcomes the inability of the users to monitor resources in real time due to not presenting the resource occupancy situation.

In addition, the presenting method and system of the machine learning automatic modeling process and the computer-readable storage medium provided in the present disclosure may present log information in the machine learning automatic modeling process to the users, which may enable the users to perceive that the modeling process is in progress, and may satisfy the users' demands for reviewing and debugging error information at any time.

In addition, the presenting method and system of the machine learning automatic modeling process and the computer-readable storage medium provided in the present disclosure may present dynamic progress information of the machine learning automatic modeling process to the users so as to help the users understand real-time data related to the machine learning automatic modeling process.

In addition, the presenting method and system of the machine learning automatic modeling process and the computer-readable storage medium provided in the present disclosure may provide the users with buttons for partial adjustment of modeling schemes (for example, feature editing or feature deletion, etc.) to facilitate the experienced users to be able to adjust the modeling schemes according to their needs in the machine learning automatic modeling process, which overcomes the defect of bad effect of a model caused by overfitting of a model that may occur in the existing automatic modeling process.

## Claims

1. A presenting method of a machine learning automatic modeling process, which presenting method is executed by a computing device, the presenting method comprising:
determining a current running stage of the machine learning automatic modeling process and a running process of the current running stage, wherein the machine learning automatic modeling process is divided (S301) into a plurality of stages, and the plurality of stages comprise a data table concatenation stage, a feature extraction stage, and a model training stage;
displaying (S302) a process card panel corresponding to each stage of the machine learning automatic modeling process according to the determined current running stage and the determined running process of the current running stage; and
displaying (S303) a flowchart corresponding to the plurality of stages according to the determined running process of the current running stage, wherein the flowchart comprises a plurality of nodes corresponding to the plurality of stages ,
wherein the displaying the process card panel corresponding to each stage of the machine learning automatic modeling process according to the determined current running stage and the determined running process of the current running stage comprises:
unfolding a process card panel corresponding to the determined current running stage, while keeping process card panels corresponding to stages that have been completed and stages that have not run yet in a folding state, according to the determined current running stage; and
displaying a dynamic effect reflecting at least one of a running process and a running result of the current running stage, in real time in the unfolded process card panel, according to the determined running process of the current running stage,
wherein the displaying the flowchart corresponding to the plurality of stages according to the determined running process of the current running stage comprises:
displaying a dynamic effect reflecting the running process of the current running stage in real time in a node corresponding to the current running stage of the flowchart, according to the determined running process of the current running stage;
wherein the presenting method further comprises:
in the case of turning off automatic feature exploration in the feature extraction stage, when the feature extraction stage is running, whenever a round of feature exploration is completed, pausing the feature exploration, and displaying result information of this round of the feature exploration, a button for editing features, a button for continuing the feature exploration, and a button for entering the model training stage;
allowing the users to edit at least one explored feature in this round and a previous round, when receiving a user input for the button for editing features;
proceeding to a next round of the feature exploration, when receiving a user input for the button for continuing the feature exploration; and
ending the feature exploration and starting to run the model training stage, when receiving a user input for the button for entering the model training stage.

2. The presenting method of claim 1, the determining a current running stage of the machine learning automatic modeling process, and a running process of the current running stage comprises: when performing the machine learning automatic modeling, generating a task tag, for a current task in a background, indicating a stage of the task and a process position of the task in the stage;
querying the task tag of the background in a foreground; and
determining the current running stage and the running process of the current running stage according to the task tag queried in the foreground.

3. The presenting method of claim 1, wherein the dynamic effect reflecting at least one of the running process and the running result of the current running stage is displayed in real time in the unfolded process card panel by the following manners:
identifying a running state indicating that it is in progress, and displaying output progress information corresponding to the running process of the current running stage in real time, in the unfolded process card panel.

4. The presenting method of claim 1, wherein the process card panels corresponding to the stages that have been completed and the stages that have not run are kept in a folding state by the following manners:
identifying a running state indicating that it has been completed, and displaying a part of output result information of the stage in the folded process card panel corresponding to the stage that has been completed, and
identifying a running state indicating that it has not run yet in the folded process card panel corresponding to the stage that has not run yet.

5. The presenting method of claim 1, wherein the displaying the process card panel corresponding to each stage of the machine learning automatic modeling process further comprises:
when receiving a user input for the folded process card panel corresponding to the stage that has been completed, unfolding the process card panel and displaying the output result information of the stage in the unfolded process card panel.

6. The presenting method of claim 1, further comprising at least one of the following steps:
as the machine learning automatic modeling progresses, collecting and displaying resource occupancy information in the machine learning automatic modeling process in real time;
as the machine learning automatic modeling progresses, generating and displaying log information in the machine learning automatic modeling process in real time;
displaying dynamic progress information about the machine learning automatic modeling process;
wherein the dynamic progress information about the machine learning automatic modeling process comprises at least one of: information about the number of exploration rounds of at least one of automatic feature engineering and a model scheme, information about time having been spent in modeling, information about time for remaining modeling, and information about a real-time highest AUC value, wherein the AUC value is a value for estimating effect of a model.

7. The presenting method of claim 1, further comprising:
displaying a button for pausing the machine learning automatic modeling process; and
pausing the machine learning automatic modeling process when receiving the user input for the button.

8. The presenting method of any one of claims 1 to 7, wherein the data table concatenation stage refers to a stage of generating a concatenation table based on at least one data table containing attribute data and at least one data table containing target result data,
wherein the displaying the process card panel corresponding to each stage of the machine learning automatic modeling process according to the determined current running stage and the determined running process of the current running stage comprises at least one of:
when the data table concatenation stage is running, displaying the output progress information about the amount of data that has been concatenated over time, in real time in the unfolded process card panel corresponding to the data table concatenation stage; and
when completing the running of the data table concatenation stage, displaying the amount of final processed data in the folded process card panel corresponding to the data table concatenation stage, and when receiving the user input for the folded process card panel corresponding to the data table concatenation stage, unfolding the process card panel corresponding to the data table concatenation stage and displaying the output result information about the amount of final processed data in the unfolded process card panel corresponding to the data table concatenation stage,
wherein the flowchart corresponding to the plurality of stages comprise a node indicating the data table concatenation stage, and the displaying the dynamic effect reflecting the running process of the current running stage in real time in the node corresponding to the current running stage of the flowchart according to the determined running process of the current running stage comprises:
when the data table concatenation stage is running, displaying the dynamic effect reflecting the running process of the data table concatenation stage in real time in the node indicating the data table concatenation stage in the flowchart, according to the running process of generating the concatenation table.

9. The presenting method of any one of claims 1 to 7, wherein the feature extraction stage refers to a stage of generating features based on the attribute data,
wherein the displaying the process card panel corresponding to each stage of the machine learning automatic modeling process according to the determined current running stage and the determined running process of the current running stage comprises at least one of:
when the feature extraction stage is running, displaying the output progress information comprising at least one of the number, name, and importance of the generated features in real time in the unfolded process card panel corresponding to the feature extraction stage; and
when completing the running of the feature extraction stage, displaying the amount of final generated features in the folded process card panel corresponding to the feature extraction stage, and when receiving the user input for the process card panel in a folding state corresponding to the feature extraction stage, unfolding the process card panel corresponding to the feature extraction stage and displaying the output result information comprising at least one of the number, name, and importance of the final generated features in the unfolded process card panel corresponding to the feature extraction stage,
wherein the flowchart corresponding to the plurality of stages comprise a node indicating the feature extraction stage, and the displaying the dynamic effect reflecting the running process of the current running stage in real time in the node corresponding to the current running stage of the flowchart according to the running process of the current running stage comprises:
when the feature extraction stage is running, displaying the dynamic effect reflecting the running process of the feature extraction stage in real time in the node indicating the feature extraction stage in the flowchart, according to the running process of the feature extraction stage.

10. The presenting method of any one of claims 1 to 7, wherein the model training stage comprises at least one algorithm sub-stage of performing model training using at least one algorithm,
wherein the displaying the process card panel corresponding to each stage of the machine learning automatic modeling process according to the determined current running stage and the determined running process of the current running stage comprises at least one of:
when the model training stage is running, displaying the output progress information comprising an AUC value for estimating the effect of the model obtained according to the number of exploration rounds of each algorithm and a real-time highest AUC value of each algorithm in the unfolded process card panel corresponding to the model training stage; and
when completing the running of the model training stage, displaying the output result information comprising an AUC value obtained according to the number of exploration rounds of each algorithm and a final highest AUC value of each algorithm in the unfolded process card panel corresponding to the model training stage,
wherein the flowchart corresponding to the plurality of stages comprise at least one node respectively indicating the at least one algorithm sub-stage, and the displaying the dynamic effect reflecting the running process of the current running stage in real time in the node corresponding to the current running stage of the flowchart according to the determined running process of the current running stage comprises:
when the model training stage is running, displaying the dynamic effect reflecting the running process of each of the at least one algorithm sub-stage in real time in the at least one node respectively indicating the at least one algorithm sub-stage in the flowchart, according to a running process of each of the at least one algorithm sub-stage.

11. A system comprising at least one computing device and at least one storage device storing instructions, wherein the instructions causes, while being executed by the at least one computing device, the at least one computing device to execute the presenting method of any one of claims 1 to 10.

12. A computer-readable storage medium storing instructions, wherein the instructions causes, while being executed by at least one computing device, the at least one computing device to execute the presenting method of any one of claims 1 to 10.

## Patentansprüche

1. Präsentationsverfahren eines automatischen Modellierungsprozesses für maschinelles Lernen, wobei das Präsentationsverfahren durch eine Rechenvorrichtung ausgeführt wird, wobei das Präsentationsverfahren aufweist:
Bestimmen einer aktuellen ausgeführten Phase des automatischen Modellierungsprozesses für maschinelles Lernen und eines ausgeführten Prozesses der aktuell ausgeführten Phase, wobei der automatische Modellierungsprozess für maschinelles Lernen in mehrere Phasen unterteilt ist (S301) und die mehreren Phasen eine Datentabellenverkettungsphase, eine Merkmalsextraktionsphase und eine Modelltrainingsphase aufweisen;
Anzeigen (S302) eines Prozesskartenfeldes, das jeder Phase des automatischen Modellierungsprozesses für maschinelles Lernen entspricht, gemäß der bestimmten aktuell ausgeführten Phase und dem bestimmten ausgeführten Prozess der aktuell ausgeführten Phase; und
Anzeigen (S303) eines Flussdiagramms, das den mehreren Phasen entspricht, gemäß dem bestimmten ausgeführten Prozess der aktuell ausgeführten Phase, wobei das Flussdiagramm mehrere Knoten aufweist, die den mehreren Phasen entsprechen,
wobei das Anzeigen des Prozesskartenfeldes, das jeder Phase des automatischen Modellierungsprozesses für maschinelles Lernen gemäß der bestimmten aktuell ausgeführten Phase und dem bestimmten ausgeführten Prozess der aktuell ausgeführten Phase entspricht, aufweist:
Entfalten eines Prozesskartenfeldes, das der bestimmten aktuell ausgeführten Phase entspricht, während Prozesskartenfelder, die Phasen, die abgeschlossen worden sind, und Phasen, die noch nicht ausgeführt wurden, entsprechen, in einem Faltzustand gehalten werden, gemäß der bestimmten aktuell ausgeführten Phase; und
Anzeigen eines dynamischen Effekts, der einen ausgeführten Prozess und/oder ein Ausführungsergebnis der aktuell ausgeführten Phase widerspiegelt, in Echtzeit in dem entfalteten Prozesskartenfeld gemäß dem bestimmten ausgeführten Prozess der aktuell ausgeführten Phase,
wobei das Anzeigen des Flussdiagramms, das den mehreren Phasen gemäß dem bestimmten ausgeführten Prozess der aktuell ausgeführten Phase entspricht, aufweist:
Anzeigen eines dynamischen Effekts, der den ausgeführten Prozess der aktuell ausgeführten Phase widerspiegelt, in Echtzeit in einem Knoten, der der aktuell ausgeführten Phase des Flussdiagramms entspricht, gemäß dem bestimmten ausgeführten Prozess der aktuell ausgeführten Phase;
wobei das Präsentationsverfahren ferner aufweist:
im Fall des Ausschaltens einer automatischen Merkmalserkundung in der Merkmalsextraktionsphase, wenn die Merkmalsextraktionsphase ausgeführt wird, immer dann, wenn eine Runde der Merkmalserkundung abgeschlossen ist, Pausieren der Merkmalserkundung und Anzeigen von Ergebnisinformationen dieser Runde der Merkmalserkundung, einer Schaltfläche zum Bearbeiten von Merkmalen, einer Schaltfläche zum Fortsetzen der Merkmalserkundung und einer Schaltfläche zum Eintreten in die Modelltrainingsphase;
Ermöglichen, dass die Benutzer mindestens ein erkundetes Merkmal in dieser Runde und einer vorherigen Runde bearbeiten, wenn sie eine Benutzereingabe für die Schaltfläche zum Bearbeiten von Merkmalen empfangen;
Fortfahren mit einer nächsten Runde der Merkmalserkundung, wenn eine Benutzereingabe für die Schaltfläche zum Fortsetzen der Merkmalserkundung empfangen wird; und
Beenden der Merkmalserkundung und Beginnen, die Modelltrainingsphase auszuführen, wenn eine Benutzereingabe für die Schaltfläche zum Eintreten in die Modelltrainingsphase empfangen wird.

2. Präsentationsverfahren nach Anspruch 1, wobei das Bestimmen einer aktuell ausgeführten Phase des automatischen Modellierungsprozesses für maschinelles Lernen und eines ausgeführten Prozesses der aktuell ausgeführten Phase aufweist: wenn das automatische Modellieren für maschinelles Lernen durchgeführt wird, Erzeugen einer Aufgabenmarkierung für eine aktuelle Aufgabe in einem Hintergrund, die eine Phase der Aufgabe und eine Prozessposition der Aufgabe in der Phase angibt;
Abfragen der Aufgabenmarkierung des Hintergrunds in einem Vordergrund; und
Bestimmen der aktuell ausgeführten Phase und des ausgeführten Prozesses der aktuell ausgeführten Phase gemäß der im Vordergrund abgefragten Aufgabenmarkierung.

3. Präsentationsverfahren nach Anspruch 1, wobei der dynamische Effekt, der den ausgeführten Prozess und/oder das Ausführungsergebnis der aktuell ausgeführten Phase widerspiegelt, in dem entfalteten Prozesskartenfeld auf die folgenden Weisen in Echtzeit angezeigt wird:
Identifizieren eines ausgeführten Zustands, der angibt, dass er im Gange ist, und Anzeigen von Ausgabefortschrittsinformationen, die dem ausgeführten Prozess der aktuell ausgeführten Phase entsprechen, in dem entfalteten Prozesskartenfeld in Echtzeit.

4. Präsentationsverfahren nach Anspruch 1, wobei die Prozesskartenfelder, die den Phasen, die abgeschlossen worden sind, und den Phasen, die noch nicht ausgeführt wurden, entsprechen, auf die folgenden Weisen in einem Faltzustand gehalten werden:
Identifizieren eines ausgeführten Zustands, der angibt, dass er abgeschlossen worden ist, und Anzeigen eines Teils von Ausgabeergebnisinformationen der Phase in dem gefalteten Prozesskartenfeld, das der Phase entspricht, die abgeschlossen worden ist, und
Identifizieren eines ausgeführten Zustands, der angibt, dass er noch nicht ausgeführt wurde, in dem gefalteten Prozesskartenfeld, das der Phase entspricht, die noch nicht ausgeführt wurde.

5. Präsentationsverfahren nach Anspruch 1, wobei das Anzeigen des Prozesskartenfeldes, das jeder Phase des automatischen Modellierungsprozesses für maschinelles Lernen entspricht, ferner aufweist:
wenn eine Benutzereingabe für das gefaltete Prozesskartenfeld empfangen wird, das der Phase entspricht, die abgeschlossen worden ist, Entfalten des Prozesskartenfeldes und Anzeigen der Ausgabeergebnisinformationen der Phase in dem entfalteten Prozesskartenfeld.

6. Präsentationsverfahren nach Anspruch 1, das ferner mindestens einen der folgenden Schritte aufweist:
wenn das automatische Modellieren für maschinelles Lernen fortschreitet, Sammeln und Anzeigen von Ressourcenbelegungsinformationen in dem automatischen Modellierungsprozess für maschinelles Lernen in Echtzeit;
wenn das automatische Modellieren für maschinelles Lernen fortschreitet, Erzeugen und Anzeigen von Protokollinformationen in dem automatischen Modellierungsprozess für maschinelles Lernen in Echtzeit;
Anzeigen von dynamischen Fortschrittsinformationen über den automatischen Modellierungsprozess für maschinelles Lernen;
wobei die dynamischen Fortschrittsinformationen über den automatischen Modellierungsprozess für maschinelles Lernen mindestens eines aufweisen von: Informationen über die Anzahl von Erkundungsrunden von mindestens einem von automatischer Merkmalskonstruktion und einem Modellschema, Informationen über Zeit, die beim Modellieren verbracht wurde, Informationen über Zeit für verbleibendes Modellieren und Informationen über einen höchsten Echtzeit-AUC-Wert, wobei der AUC-Wert ein Wert zum Schätzen der Wirkung eines Modells ist.

7. Präsentationsverfahren nach Anspruch 1, das ferner aufweist:
Anzeigen einer Schaltfläche zum Unterbrechen des automatischen Modellierungsprozesses für maschinelles Lernen; und
Unterbrechen des automatischen Modellierungsprozesses für maschinelles Lernen, wenn die Benutzereingabe für die Schaltfläche empfangen wird.

8. Präsentationsverfahren nach einem der Ansprüche 1 bis 7, wobei sich die Datentabellenverkettungsphase auf eine Phase des Erzeugens einer Verkettungstabelle basierend auf mindestens einer Datentabelle, die Attributdaten enthält, und mindestens einer Datentabelle, die Zielergebnisdaten enthält, bezieht,
wobei das Anzeigen des Prozesskartenfeldes, das jeder Phase des automatischen Modellierungsprozesses für maschinelles Lernen gemäß der bestimmten aktuell ausgeführten Phase und dem bestimmten ausgeführten Prozess der aktuell laufenden Phase entspricht, mindestens eines aufweist von:
wenn die Datentabellenverkettungsphase ausgeführt wird, Anzeigen der Ausgabefortschrittsinformationen über die Datenmenge, die im Laufe der Zeit verkettet worden ist, in dem entfalteten Prozesskartenfeld, das der Datentabellenverkettungsphase entspricht, in Echtzeit; und
wenn das Ausführen der Datentabellenverkettungsphase abgeschlossen ist, Anzeigen der Menge von endgültig verarbeiteten Daten in dem gefalteten Prozesskartenfeld, das der Datentabellenverkettungsphase entspricht, und wenn die Benutzereingabe für das gefaltete Prozesskartenfeld empfangen wird, das der Datentabellenverkettungsphase entspricht, Entfalten des Prozesskartenfeldes, das der Datentabellenverkettungsphase entspricht, und Anzeigen der Ausgabeergebnisinformationen über die Menge von endgültig verarbeiteten Daten in dem entfalteten Prozesskartenfeld, das der Datentabellenverkettungsphase entspricht,
wobei das Flussdiagramm, das den mehreren Phasen entspricht, einen Knoten aufweist, der die Datentabellenverkettungsphase angibt, und das Anzeigen des dynamischen Effekts, der den ausgeführten Prozess der aktuell ausgeführten Phase in dem Knoten in Echtzeit wiederspiegelt, der der aktuell ausgeführten Phase des Flussdiagramms gemäß dem bestimmten ausgeführten Prozess der aktuell ausgeführten Phase entspricht, aufweist:
wenn die Datentabellenverkettungsphase ausgeführt wird, Anzeigen des dynamischen Effekts, der den ausgeführten Prozess der Datentabellenverkettungsphase in dem Knoten in Echtzeit wiederspiegelt, der die Datentabellenverkettungsphase in dem Flussdiagramm gemäß dem ausgeführten Prozess des Erzeugens der Verkettungstabelle angibt.

9. Präsentationsverfahren nach einem der Ansprüche 1 bis 7, wobei sich die Merkmalsextraktionsphase auf eine Phase des Erzeugens von Merkmalen basierend auf den Attributdaten bezieht,
wobei das Anzeigen des Prozesskartenfeldes, das jeder Phase des automatischen Modellierungsprozesses für maschinelles Lernen gemäß der bestimmten aktuell ausgeführten Phase und dem bestimmten ausgeführten Prozess der aktuell ausgeführten Phase entspricht, mindestens eines aufweist von:
wenn die Merkmalsextraktionsphase ausgeführt wird, Anzeigen der Ausgabefortschrittsinformationen, die mindestens eines von der Anzahl, dem Namen und der Wichtigkeit der erzeugten Merkmale aufweisen, in dem entfalteten Prozesskartenfeld, das der Merkmalsextraktionsphase entspricht, in Echtzeit; und
wenn das Ausführen der Merkmalsextraktionsphase abgeschlossen ist, Anzeigen der Menge von endgültig erzeugten Merkmalen in dem gefalteten Prozesskartenfeld, das der Merkmalsextraktionsphase entspricht, und wenn die Benutzereingabe für das Prozesskartenfeld in einem gefalteten Zustand empfangen wird, das der Merkmalsextraktionsphase entspricht, Entfalten des Prozesskartenfeldes, das der Merkmalsextraktionsphase entspricht, und Anzeigen der Ausgabeergebnisinformationen, die mindestens eines von der Anzahl, dem Namen und der Wichtigkeit der endgültig erzeugten Merkmale aufweisen, in dem entfalteten Prozesskartenfeld, das der Merkmalsextraktionsphase entspricht,
wobei das Flussdiagramm, das den mehreren Phasen entspricht, einen Knoten aufweist, der die Merkmalsextraktionsphase angibt, und das Anzeigen des dynamischen Effekts, der den ausgeführten Prozess der aktuell ausgeführten Phase in dem Knoten in Echtzeit wiederspiegelt, der der aktuell ausgeführten Phase des Flussdiagramms gemäß dem ausgeführten Prozess der aktuell ausgeführten Phase entspricht, aufweist:
wenn die Merkmalsextraktionsphase ausgeführt wird, Anzeigen des dynamischen Effekts, der den ausgeführten Prozess der Merkmalsextraktionsphase in dem Knoten in Echtzeit wiederspiegelt, der die Merkmalsextraktionsphase in dem Flussdiagramm gemäß dem ausgeführten Prozess der Merkmalsextraktionsphase angibt.

10. Präsentationsverfahren nach einem der Ansprüche 1 bis 7, wobei die Modelltrainingsphase mindestens eine Algorithmusunterphase zum Durchführen eines Modelltrainings unter Verwendung mindestens eines Algorithmus aufweist,
wobei das Anzeigen des Prozesskartenfeldes, das jeder Phase des automatischen Modellierungsprozesses für maschinelles Lernen gemäß der bestimmten aktuell ausgeführten Phase und dem bestimmten ausgeführten Prozess der aktuell ausgeführten Phase entspricht, mindestens eines aufweist von:
wenn die Modelltrainingsphase ausgeführt wird, Anzeigen der Ausgabefortschrittsinformationen, die einen AUC-Wert zum Schätzen der Wirkung des Modells aufweisen, der gemäß der Anzahl von Erkundungsrunden jedes Algorithmus und einem höchsten Echtzeit-AUC-Wert jedes Algorithmus in dem entfalteten Prozesskartenfeld erhalten wird, das der Modelltrainingsphase entspricht; und
wenn das Ausführen der Modelltrainingsphase abgeschlossen ist, Anzeigen der Ausgabeergebnisinformationen, die einen AUC-Wert aufweisen, der gemäß der Anzahl von Erkundungsrunden jedes Algorithmus und einem höchsten endgültigen AUC-Wert jedes Algorithmus in dem entfalteten Prozesskartenfeld erhalten wird, das der Modelltrainingsphase entspricht,
wobei das Flussdiagramm, das den mehreren Phasen entspricht, mindestens einen Knoten aufweist, der jeweils die mindestens eine Algorithmusunterphase angibt, und das Anzeigen des dynamischen Effekts, der den ausgeführten Prozess der aktuell ausgeführten Phase in dem Knoten in Echtzeit wiederspiegelt, der der aktuell ausgeführten Phase des Flussdiagramms gemäß dem bestimmten ausgeführten Prozess der aktuell ausgeführten Phase entspricht, aufweist:
wenn die Modelltrainingsphase ausgeführt wird, Anzeigen des dynamischen Effekts, der den ausgeführten Prozess jeder der mindestens einen Algorithmusunterphase in dem mindestens einen Knoten in Echtzeit wiederspiegelt, der jeweils die mindestens eine Algorithmusunterphase in dem Flussdiagramm gemäß einem ausgeführten Prozess jeder der mindestens einen Algorithmusunterphase angibt.

11. System, das mindestens eine Rechenvorrichtung und mindestens eine Speichervorrichtung aufweist, die Anweisungen speichert, wobei die Anweisungen, während sie durch die mindestens eine Rechenvorrichtung ausgeführt werden, bewirken, dass die mindestens eine Rechenvorrichtung das Präsentationsverfahren nach einem der Ansprüche 1 bis 10 ausführt.

12. Computerlesbares Speichermedium, das Anweisungen speichert, wobei die Anweisungen, während sie durch mindestens eine Rechenvorrichtung ausgeführt werden, bewirken, dass die mindestens eine Rechenvorrichtung das Präsentationsverfahren nach einem der Ansprüche 1 bis 10 ausführt.

## Revendications

1. Procédé de présentation d'un processus de modélisation automatique par apprentissage machine, lequel procédé de présentation est mis en oeuvre par un dispositif informatique, le procédé de présentation comprenant :
déterminer un stade d'exécution actuel du processus de modélisation automatique par apprentissage machine et un processus d'exécution du stade d'exécution actuel, dans lequel le processus de modélisation automatique par apprentissage machine est divisé (S301) en une pluralité de stades, et la pluralité de stades comprend un stade de concaténation de table de données, un stade d'extraction de caractéristiques et un stade d'entraînement de modèle ;
afficher (S302) un panneau de carte de processus correspondant à chaque stade du processus de modélisation automatique par apprentissage machine selon le stade d'exécution actuel déterminé et le processus d'exécution déterminé du stade d'exécution actuel ; et
afficher (S303) un organigramme correspondant à la pluralité de stades selon le processus d'exécution déterminé du stade d'exécution actuel, dans lequel l'organigramme comprend une pluralité de noeuds correspondant à la pluralité de stades,
dans lequel l'affichage du panneau de carte de processus correspondant à chaque stade du processus de modélisation automatique par apprentissage machine selon le stade d'exécution actuel déterminé et le processus d'exécution déterminé du stade d'exécution actuel comprend :
déplier un panneau de carte de processus correspondant au stade d'exécution actuel déterminé tout en conservant des panneaux de carte de processus correspondant aux stades qui ont été achevés et aux stades qui n'ont pas encore été exécutés dans un état de pliage, selon le stade d'exécution actuel déterminé ; et
afficher un effet dynamique reflétant au moins un parmi un processus d'exécution et un résultat d'exécution du stade d'exécution actuel, en temps réel dans le panneau de carte de processus déplié, selon le processus d'exécution déterminé du stade d'exécution actuel,
dans lequel l'affichage de l'organigramme correspondant à la pluralité de stades selon le processus d'exécution déterminé du stade d'exécution actuel comprend :
afficher un effet dynamique reflétant le processus d'exécution du stade d'exécution actuel en temps réel dans un noeud correspondant au stade d'exécution actuel de l'organigramme, selon le processus d'exécution déterminé du stade d'exécution actuel ;
dans lequel le procédé de présentation comprend en outre :
en cas de désactivation de l'exploration automatique de caractéristiques dans le stade d'extraction de caractéristiques, lorsque le stade d'extraction de caractéristiques est en cours d'exécution, chaque fois qu'un cycle d'exploration de caractéristiques est achevé, mettre en pause l'exploration de caractéristiques et afficher des informations de résultat de ce cycle de l'exploration de caractéristiques, un bouton d'édition de caractéristiques, un bouton de poursuite de l'exploration de caractéristiques et un bouton d'entrée dans le stade d'entraînement de modèle ;
permettre aux utilisateurs d'éditer au moins une caractéristique explorée dans ce cycle et un cycle précédent, à réception d'une entrée utilisateur pour le bouton d'édition de caractéristiques ;
passer à la campagne suivante de l'exploration de caractéristiques à réception d'une entrée utilisateur pour le bouton de poursuite de l'exploration de caractéristiques ; et
mettre fin à l'exploration de caractéristiques et démarrer l'exécution du stade d'entraînement de modèle à réception d'une entrée utilisateur pour le bouton d'entrée dans le stade d'entraînement de modèle.

2. Procédé de présentation selon la revendication 1, la détermination d'un stade d'exécution actuel du processus de modélisation automatique par apprentissage machine et d'un processus d'exécution du stade d'exécution actuel comprend : lors de la réalisation de la modélisation automatique par apprentissage machine, générer une étiquette de tâche, pour une tâche actuelle dans un arrière-plan, indiquant un stade de la tâche et une position de processus de la tâche dans le stade ;
interroger l'étiquette de tâche de l'arrière-plan dans un premier plan ; et
déterminer le stade d'exécution actuel et le processus d'exécution du stade d'exécution actuel selon l'étiquette de tâche interrogée dans le premier plan.

3. Procédé de présentation selon la revendication 1, dans lequel l'effet dynamique reflétant au moins un parmi un processus d'exécution et le résultat d'exécution du stade d'exécution actuel est affiché en temps réel dans le panneau de carte de processus déplié des manières suivantes :
en identifiant un état d'exécution indiquant qu'il est en cours et en affichant des informations de progression de sortie correspondant au processus d'exécution du stade d'exécution actuel en temps réel dans le panneau de carte de processus déplié.

4. Procédé de présentation selon la revendication 1, dans lequel les panneaux de carte de processus correspondant aux stades qui ont été achevés et aux stades qui ne sont pas exécutés sont maintenus dans un état de pliage des manières suivantes :
en identifiant un état d'exécution indiquant qu'il a été achevé et en affichant une partie des informations de résultat de sortie du stade dans le panneau de carte de processus plié correspondant au stade qui a été achevé, et
en identifiant un état d'exécution indiquant qu'il n'est pas encore exécuté dans le panneau de carte de processus plié correspondant au stade qui n'est pas encore exécuté.

5. Procédé de présentation selon la revendication 1, dans lequel l'affichage du panneau de carte de processus correspondant à chaque stade du processus de modélisation automatique par apprentissage machine comprend en outre :
à réception d'une entrée utilisateur pour le panneau de carte de processus plié correspondant au stade qui a été achevé, déplier le panneau de carte de processus et afficher les informations de résultat de sortie du stade dans le panneau de carte de processus déplié.

6. Procédé de présentation selon la revendication 1, comprenant en outre l'une au moins des étapes suivantes :
à mesure que la modélisation automatique par apprentissage machine progresse, collecter et afficher des informations d'occupation de ressources dans le processus de modélisation automatique par apprentissage machine en temps réel ;
à mesure que la modélisation automatique par apprentissage machine progresse, générer et afficher des informations de journal dans le processus de modélisation automatique par apprentissage machine en temps réel ;
afficher des informations de progression dynamique concernant le processus de modélisation automatique par apprentissage machine ;
dans lequel les informations de progression dynamique concernant le processus de modélisation automatique par apprentissage machine comprennent au moins une parmi : des informations concernant le nombre de campagnes d'exploration d'au moins un parmi une ingénierie de caractéristique automatique et un schéma de modèle, des informations concernant le temps qui a été passé à la modélisation, des informations concernant le temps pour la modélisation restante et des informations concernant une valeur ASC la plus élevée en temps réel, dans lequel la valeur ASC est une valeur pour estimer l'effet d'un modèle.

7. Procédé de présentation selon la revendication 1, comprenant en outre :
afficher un bouton pour mettre en pause le processus de modélisation automatique par apprentissage machine ; et mettre en pause le processus de modélisation automatique par apprentissage machine à réception de l'entrée utilisateur pour le bouton.

8. Procédé de présentation selon l'une des revendications 1 à 7, dans lequel le stade de concaténation de table de données se réfère à un stade de génération d'une table de concaténation sur la base d'au moins une table de données contenant des données d'attribut et au moins une table de données contenant des données de résultat cible,
dans lequel l'affichage du panneau de carte de processus correspondant à chaque stade du processus de modélisation automatique par apprentissage machine selon le stade d'exécution actuel déterminé et le processus d'exécution déterminé du stade d'exécution actuel comprend au moins une étape parmi :
lorsque le stade de concaténation de table de données est en cours d'exécution, afficher les informations de progression de sortie concernant la quantité de données qui a été concaténée au fil du temps, en temps réel dans le panneau de carte de processus déplié correspondant au stade de concaténation de table de données ; et
à l'achèvement de l'exécution du stade de concaténation de table de données, afficher la quantité de données traitées finales dans le panneau de carte de processus plié correspondant au stade de concaténation de table de données, et à réception de l'entrée utilisateur pour le panneau de carte de processus plié correspondant au stade de concaténation de table de données, déplier le panneau de carte de processus correspondant au stade de concaténation de table de données et afficher les informations de résultat de sortie concernant la quantité de données traitées finales dans le panneau de carte de processus déplié correspondant au stade de concaténation de table de données,
dans lequel l'organigramme correspondant à la pluralité de stades comprend un noeud indiquant le stade de concaténation de table de données, et l'affichage de l'effet dynamique reflétant le processus d'exécution du stade d'exécution actuel en temps réel dans le noeud correspondant au stade d'exécution actuel de l'organigramme selon le processus d'exécution déterminé du stade d'exécution actuel comprend :
lorsque le stade de concaténation de table de données est en cours d'exécution, afficher l'effet dynamique reflétant le processus d'exécution du stade de concaténation de table de données en temps réel dans le noeud indiquant le stade de concaténation de table de données dans l'organigramme, selon le processus d'exécution de génération de table de concaténation.

9. Procédé de présentation selon l'une des revendications 1 à 7, dans lequel le stade d'extraction de caractéristiques se réfère à un stade de génération de caractéristiques sur la base des données d'attributs,
dans lequel l'affichage du panneau de carte de processus correspondant à chaque stade du processus de modélisation automatique par apprentissage machine selon le stade d'exécution actuel déterminé et le processus d'exécution déterminé du stade d'exécution actuel comprend au moins une étape parmi :
lorsque le stade d'extraction de caractéristiques est en cours d'exécution, afficher les informations de progression de sortie comprenant au moins un parmi le nombre, le nom et l'importance des caractéristiques générées en temps réel dans le panneau de carte de processus déplié correspondant au stade d'extraction de caractéristiques ; et
à l'achèvement de l'exécution du stade d'extraction de caractéristiques, afficher la quantité de caractéristiques générées finales dans le panneau de carte de processus plié correspondant au stade d'extraction de caractéristiques, et à réception de l'entrée utilisateur pour le panneau de carte de processus dans un état de pliage correspondant au stade d'extraction de caractéristiques, déplier le panneau de carte de processus correspondant au stade d'extraction de caractéristiques et afficher les informations de résultat de sortie comprenant au moins un parmi le nombre, le nom et l'importance des caractéristiques générées finales dans le panneau de carte de processus déplié correspondant au stade d'extraction de caractéristiques,
dans lequel l'organigramme correspondant à la pluralité de stades comprend un noeud indiquant le stade d'extraction de caractéristiques, et l'affichage de l'effet dynamique reflétant le processus d'exécution du stade d'exécution actuel en temps réel dans le noeud correspondant au stade d'exécution actuel de l'organigramme selon le processus d'exécution du stade d'exécution actuel comprend :
lorsque le stade d'extraction de caractéristiques est en cours d'exécution, afficher l'effet dynamique reflétant le processus d'exécution du stade d'extraction de caractéristiques en temps réel dans le noeud indiquant le stade d'extraction de caractéristiques dans l'organigramme, selon le processus d'exécution du stade d'extraction de caractéristiques.

10. Procédé de présentation selon l'une des revendications 1 à 7, dans lequel le stade d'entraînement de modèle comprend au moins un sous-stade d'algorithme consistant à réaliser un entraînement de modèle à l'aide d'au moins un algorithme,
dans lequel l'affichage du panneau de carte de processus correspondant à chaque stade du processus de modélisation automatique par apprentissage machine selon le stade d'exécution actuel déterminé et le processus d'exécution déterminé du stade d'exécution actuel comprend au moins une étape parmi :
lorsque le stade d'entraînement de modèle est en cours d'exécution, afficher les informations de progression de sortie comprenant une valeur ASC pour estimer l'effet du modèle obtenu selon le nombre de campagnes d'exploration de chaque algorithme et une valeur ASC la plus élevée en temps réel de chaque algorithme dans le panneau de carte de processus déplié correspondant au stade d'entraînement de modèle ; et
à l'achèvement de l'exécution du stade d'entraînement de modèle, afficher les informations de résultat de sortie comprenant une valeur ASC obtenue selon le nombre de campagnes d'exploration de chaque algorithme et une valeur ASC la plus élevée finale de chaque algorithme dans le panneau de carte de processus déplié correspondant au stade d'entraînement de modèle,
dans lequel l'organigramme correspondant à la pluralité de stades comprend au moins un noeud indiquant respectivement l'au moins un sous-stade d'algorithme, et l'affichage de l'effet dynamique reflétant le processus d'exécution du stade d'exécution actuel en temps réel dans le noeud correspondant au stade d'exécution actuel de l'organigramme selon le processus d'exécution déterminé du stade d'exécution actuel comprend :
lorsque le stade d'entraînement de modèle est en cours d'exécution, afficher l'effet dynamique reflétant le processus d'exécution de chacun de l'au moins un sous-stade d'algorithme en temps réel dans l'au moins un noeud indiquant respectivement l'au moins un sous-stade d'algorithme dans l'organigramme, selon un processus d'exécution de chacun de l'au moins un sous-stade d'algorithme.

11. Système comprenant au moins un dispositif informatique et au moins un dispositif de stockage stockant des instructions, dans lequel les instructions, lorsqu'elles sont mises en oeuvre par l'au moins un dispositif informatique, font mettre en oeuvre le procédé de présentation de l'une des revendications 1 à 10 à l'au moins un dispositif informatique.

12. Support de stockage lisible par ordinateur stockant des instructions, dans lequel les instructions, lorsqu'elles sont mises en oeuvre par au moins un dispositif informatique, font mettre en oeuvre le procédé de présentation de l'une des revendications 1 à 10 à l'au moins un dispositif informatique.
